# FASCICULE DE BREVET EUROPEEN

(11) **EP 0 317 410 B1**
(45) Date de publication et mention de la délivrance du brevet: **20.01.1993**
(21) Numéro de dépôt: 88402843.2
(22) Date de dépôt: 14.11.1988
(51) Int. Cl.: C09K 3/18

(54) **Composition pour revêtement anti-buée, produit revêtu de cette composition et procédé de préparation de ce produit**
Antibeschlagzusammensetzung, damit beschichtetes Produkt und Verfahren zu dessen Herstellung
Antiffoging composition, product coated with this composition and process for preparing this product

(30) Priorité: 19.11.1987 FR 8715986
(43) Date de publication de la demande: 24.05.1989
(73) Titulaire: SAINT-GOBAIN VITRAGE INTERNATIONAL, 92400 Courbevoie (FR)
(72) Inventeur: Chartier, Pascal, F-75015 Paris (FR); Kruger, Albert A., Richland, WA 99352-2046 (US)
(74) Mandataire: Luziau, Nelly

(56) Documents cités:
- US-A- 3 488 215
- US-A- 3 635 756
- US-A- 3 865 619

## Description

La présente invention concerne une composition pour revêtement antibuée utile pour former, sur un support, un film antibuée et mécaniquement résistant, un produit, portant ce film, dont la surface présente un caractère antibuée et un procédé pour préparer ce produit.

De nombreux supports, tels que des matières plastiques et le verre, présentent l'inconvénient de se recouvrir de buée lorsque la température de leur surface descend au-dessous du point de rosée de l'air ambiant. C'est le cas notamment du verre que l'on utilise pour former des vitrages pour véhicules de transport ou le bâtiment, des verres de lunettes, des lentilles, des miroirs, etc. La formation de buée sur ces surfaces entraîne une diminution de la transparence, due à la diffusion de la lumière par les gouttes d'eau, ce qui peut provoquer une gêne importante.

Pour éviter la formation de buée, c'est-à-dire la condensation de fines gouttelettes d'eau sur un support, on a proposé de déposer des couches hydrophiles. Ainsi, la demande de brevet US 3 635 756 décrit une composition comprenant des monomères d'esters d'acide acryliques ou méthacryliques et des monomères d'acides acryliques ou méthacryliques pour former un revêtement antibuée. La propriété antibuée est apportée par les fonctions esters des monomères précités. Cette composition est formulée de manière à ce que ce soient des polymères préalablement formés qui sont appliqués sur le support et qui sont ensuite durcis. Cette mise en oeuvre nécessitant de nombreuses opérations est longue et couteuse. De même le brevet allemand DE 1 928 409 et l'US 3 865 619 décrivent un revêtement antibuée formé à partir de polymères d'acrylate ou de méthacrylate d'hydroxyalkyle que l'on applique sur le support. Ces couches très hydrophiles absorbent l'eau et permettent la formation, avec l'eau en excès, d'une pellicule d'eau sur la surface qui n'empêche pas la transparence. Cependant, ces couches, par suite de l'absorption d'eau, gonflent, se ramollissent et deviennent moins résistantes mécaniquement.

La réticulation de ces couches améliorent leur résistance mécanique, mais leur propriété antibuée, c'est-à-dire l'aptitude à absorber l'eau sur toute la surface du support, diminue.

Pour compenser l'effet nuisible de la réticulation sur la caractère antibuée, on a proposé, comme il est décrit par exemple au brevet français 2 253 075, d'ajouter des tensioactifs.

Cependant, on continue à chercher des compositions pour revêtement antibuée à partir desquelles on peut former, par des procédés facilement mis en oeuvre, des couches dont les propriétés d'antibuée et de résistance mécanique sont durables.

La présente invention a donc pour objet :
- une composition pour revêtement antibuée utile pour former, sur un support, un film présentant des caractéristiques d'antibuée et de résistance mécanique, notamment de résistance à l'abrasion, tout en conservant les qualités optiques du support,
- un produit formé d'un support en verre ou en matière plastique, enduit de cette composition antibuée et,
- un procédé pour préparer ce produit.

La composition réactive destinée à être appliquée sur un support en verre ou en matière plastique pour former un revêtement transparent antibuée et résistant à l'abrasion, selon l'invention, comprend :
A) de 40 à 80 % en masse d'au moins un monomère acide acrylique ou méthacrylique.
B) de 20 à 60 % en masse d'au moins un monomère ester d'acide acrylique ou méthacrylique à chaîne courte,
C) de 1 à 15 % en masse, basé sur la masse totale des monomères (A) et (B) d'un agent de réticulation, choisi parmi les monomères ou oligomères acryliques polyfonctionnels.
D) de 0,1 à 5 % en masse, basé sur la masse totale des monomères (A) et (B), d'un amorceur de polymérisation par action du rayonnement ultra-violet.

La mise au point de compositions utiles pour former, sur un support, une couche ayant des caractéristiques d'antibuée et de résistance à l'abrasion, se heurte, comme on l'a indiqué, à des exigences contradictoires : les couches ayant une meilleure action antibuée présentent une résistance à l'abrasion moindre et lorsque la résistance à l'abrasion des couches est améliorée, on observe une diminution de l'effet antibuée.

Ainsi, le choix et la quantité des différents constituants de la composition selon l'invention sont déterminants pour obtenir une couche ayant les propriétés souhaitées.

Le composant (A), le monomère acide acrylique ou méthacrylique, apporte la caractéristique d'hydrophilie et est utilisé en quantité de 40 à 80 % en masse et, de préférence, en quantité de 50 à 60 %. Des quantités inférieures à 40 % conduisent à la formation d'une couche moins hydrophile présentant un caractère antibuée insuffisant.

Le composant (B) est un ester de l'acide acrylique ou méthacrylique qui confère à la couche obtenue une meilleure résistance mécanique. Cet ester a de préférence une chaîne courte pour apporter en outre un caractère hydrophile.

Le composant (B) correspond à la formule 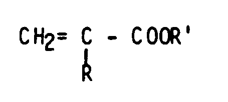
où R est atome d'hydrogène ou un groupe méthyle et R' est un groupe alkyle inférieur ou un groupe hydroxyalkyle inférieur. Les groupes alkyles contiennent de préférence de 1 à 4 atomes de carbone. Lorsque le groupe alkyle contient plus de 4 atomes de carbone, le monomère a un effet hydrophobe : il est alors nécessaire de l'utiliser en quantité moindre au profit du monomère A, l'acide acrylique ou méthacrylique, et la résistance mécanique du polymère diminue.

Les esters que l'on peut utiliser particulièrement dans l'invention sont l'acrylate de méthyle, le méthacrylate de méthyle, le méthacrylate d'hydroxyéthyle et le méthacrylate d'hydroxypropyle. On préfère utiliser le méthacrylate de méthyle qui, en plus des caractéristiques de résistance à l'abrasion, apporte des propriétés de transparence et d'adhérence, particulièrement au verre.

On utilise le composant (B) en quantité de 20 % à 60 % en masse et de préférence de 40 à 50 % en masse.

Comme agent de réticulation, on peut utiliser tout composé polyfonctionnel approprié. Des agents de réticulation particulièrement utiles, sont des monomères ou oligomères acryliques polyfonctionnels tels que le diacrylate de 1,4-butanediol, le triacrylate de triméthylol propane, le pentaacrylate de dipentaérythritol, le diacrylate de tripropylèneglycol et le diacrylate de diéthylèneglycol. L'agent de réticulation représente de 1 à 15 % de la masse totale des monomères (A) et (B), et de préférence de 5 à 10 %.

La résistance mécanique de la couche obtenue à partir de la composition selon l'invention dépend de la présence du monomère acrylate ou méthacrylate, mentionné précédemment, mais aussi de l'agent de réticulation utilisé. Ainsi, avec un agent de réticulation acrylique polyfonctionnel comme le pentaacrylate de dipentaérythritol, on peut obtenir une réticulation plus importante du polymère, ce qui améliore la résistance mécanique. On peut alors utiliser l'ester acrylique ou méthacrylique (composant B) en quantité moindre et augmenter la quantité de composant (A), l'acide acrylique ou méthacrylique, qui apporte principalement les propriétés hydrophiles et par suite le caractère antibuée souhaité.

Le composé amorceur de polymérisation par action du rayonnement ultraviolet représente généralement de 0,1 à 5 % de la masse totale des monomères (A) et (B) et de préférence de 0,1 à 0,5 %. Comme amorceur de polymérisation, on utilise des composés ayant une grande activité pour la polymérisation de monomères non saturés, tels que la benzophénone, le benzile, des thioxanthones et leurs dérivés. Des amorceurs de polymérisation utiles pour l'invention sont par exemple des produits "Irgacure" commercialisés par Ciba-Geigy, tels que l'"Irgacure 651" (benzildiméthylcétal), l'"Irgacure 184" (hydroxy-1-cyclohexyl)-phénylcétone, l'"Irgacure 500" qui est un mélange de benzophénone et d'(hydroxy-1-cyclohexyl)-phénylcétone.

On doit noter que l'association des composés, cités précédemment, c'est-à-dire (A) acide acrylique ou méthacrylique, (a) acrylate ou méthacrylate à chaîne courte, (C) agent de réticulation et (D) amorceur de polymérisation, constitue la base essentielle de la composition selon l'invention qui, par suite des composants eux-mêmes et de leur quantité, apporte les propriétés souhaitées d'antibuée et de résistance mécanique à la couche formée ultérieurement.

L'invention concerne aussi un produit présentant des caractéristiques d'antibuée et de résistance mécanique, particulièrement de résistance à l'abrasion, qui comprend un support et une couche de la composition décrite précédemment, polymérisée par action du rayonnement ultraviolet.

Le support peut être constitué par toute substance qui a l'inconvénient de se couvrir de buée lorsqu'il se trouve dans des conditions de température et d'humidité entraînant la condensation de gouttelettes d'eau. Ces supports sont en particulier du verre et des matières plastiques, comme le polyméthacrylate de méthyle, que l'on utilise, notamment, dans le domaine des véhicules de transport et dans le bâtiment par suite de leur transparence. La composition selon l'invention est particulièrement appropriée pour la formation de couche sur ces supports puisqu'elle conserve leurs qualités optiques.

Ces supports, avant l'application de la composition selon l'invention, doivent être très propres pour être parfaitement mouillables et permettre un bon étalement, voire un étalement spontané, de la composition. Ces supports peuvent éventuellement porter une couche intermédiaire ou être traités par tout procédé approprié pour améliorer l'adhérence de la couche.

Une composition selon l'invention, utilisée de préférence pour former la couche antibuée sur ces supports comprend, comme monomères (A) et (B), de l'acide acrylique et du méthacrylate de méthyle.

Ces monomères peuvent être associés à un agent de réticulation acrylique comme le diacrylate de 1,4-butanediol et à un amorceur de polymérisation par action de l'ultraviolet comme le benzildiméthylcétal. Dans ce cas, on obtient de bons résultats lorsque les monomères acide acrylique et méthacrylate de méthyle sont utilisés en proportion égale.

Ces monomères peuvent aussi être associés, pour former une composition selon l'invention, utile pour obtenir les résultats souhaités, à un agent de réticulation comprenant plus de deux groupes fonctionnels, comme le pentaacrylate de dipentaérythritol. Dans ce cas, comme on l'a indiqué, la composition se réticule plus et forme une couche ayant une résistance mécanique améliorée. Une composition permettant d'obtenir des résultats satisfaisants, en ce qui concerne le caractère antibuée et la résistance mécanique, peut comprendre 60 % en masse d'acide acryllque et 40 % en masse de méthacrylate de méthyle.

La quantité d'agent de réticulation dans une telle composition dépend de la réticulation souhaitée. 10 % en masse, par rapport à la masse totale des monomères acide acrylique et méthacrylate de méthyle, de cet agent de réticulation donne de bons résultats.

Les compositions décrites précédemment conviennent particulièrement bien pour des supports comme le verre. Il est, bien entendu, possible de faire varier les quantités des différents constituants de la composition, dans les intervalles cités précédemment, pour obtenir un résultat particulier qui peut dépendre du support utilisé et de l'importance du caractère antibuée souhaité.

La couche, appliquée à partir de la composition selon l'invention, sur un support tel que le verre ou le polyméthacrylate de méthyle, n'est soluble ni dans l'eau, ni dans des solvants organiques usuels comme l'acétone, le chloroforme, le carbonate de propylène. Elle est plus résistante à l'abrasion que, par exemple, des polymères à base d'acide acrylique ou de méthacrylate de méthyle proposés antérieurement comme couches antibuée. Elle présente un caractère antibuée, pratiquement permanent : notamment elle ne se recouvre pas de buée, même en atmosphère d'humidité élevée et aux températures inférieures au point de rosée comme cela peut être le cas dans une salle de bains ou à l'intérieur d'une automobile. La couche conserve même un toucher sec, ce qui suppose qu'elle absorbe fortement l'eau.

Les couches, obtenues selon l'invention, présentent un intérêt particulier pour les supports en polyméthacrylate de méthyle.

En effet, ceux-ci sont connus pour avoir une faible résistance à l'abrasion et la présence des couches selon l'invention non seulement leur confère un caractère antibuée, mais augmente d'une manière significative leur résistance à l'abrasion.

L'épaisseur de couche antibuée dépend de l'utilisation prévue du produit. On pense que l'absorption de l'eau par la couche, qui évite la formation de buée sur le support, augmente avec l'épaisseur de la couche. Si l'on recherche un produit ayant une caractéristique antibuée élevée, la couche est de préférence épaisse. Cependant, une couche épaisse nécessite une réticulation plus importante pour lui conférer une résistance mécanique suffisante, ce qui peut nuire au caractère hydrophile, donc antibuée, de la couche, comme on l'a mentionné précédemment. On peut utiliser, d'une manière satisfaisante, des couches de 20 à 100 µm.

Le procédé selon l'invention pour fabriquer un produit ayant des caractéristiques d'antibuée et de résistance mécanique consiste :
- à nettoyer la ou les surfaces à enduire pour la ou les rendre parfaitement mouillables,
- a appliquer sur ces surfaces une couche d'une composition selon l'invention,
- a exposer ces surfaces enduites au rayonnement ultraviolet pour polymériser et réticuler la composition.

Il est important que la surface à enduire par la composition selon l'invention soit parfaitement propre afin que la composition puisse s'étaler facilement, voire spontanément, pour former une couche homogène sur toute la surface.

Pour obtenir une telle surface, on peut utiliser tout procédé de traitement approprié à chaque surface. Ainsi, lorsque la surface est du verre, on peut, par exemple, la laver avec de l'eau et du savon, particulièrement avec une solution aqueuse de "Deconex 12" (qui est un phosphate associé à un agent tensioactif, de la Société Borer Chemie). On la rince ensuite avec de l'eau distillée, puis de l'alcool. On sèche éventuellement en étuve.

Pour un support en matière plastique, comme du polyméthacrylate de méthyle, on peut utiliser, pour le lavage, une solution aqueuse à 10 % de "Teepol" et on rince avec de l'eau distillée, puis on sèche en étuve à 50°C environ.

Le traitement décrit précédemment n'est pas nécessaire si le support est parfaitement propre ; c'est le cas notamment de la surface de verre lorsque le vitrage sort du four de fabrication. Le traitement antibuée selon l'invention appliqué à un vitrage peut donc avoir lieu sur la ligne de fabrication sans utiliser la première étape du procédé décrit précédemment.

La couche de composition antibuée, appliquée sur la surface propre du support doit être homogène. On peut utiliser tout procédé de couchage approprié pour obtenir une telle couche, par exemple un procédé de couchage à la coulée, au tire-film si la composition a une viscosité suffisante, à la tournette, etc. Le couchage à la coulée est particulièrement approprié lorsque la composition est très fluide : on peut obtenir alors un étalement spontané de la composition sans l'intervention d'une action extérieure qui pourrait entraîner une discontinuité de la couche.

Le support enduit de la couche de composition est exposé au rayonnement ultraviolet pour amorcer la polymérisation et réticuler le polymère. Pour cette exposition, on utilise, par exemple, une lampe à vapeur de mercure dont la puissance peut varier de quelques dizaines de watts à plusieurs milliers de watts par mètre carré de surface à traiter. La durée de l'exposition et la puissance de la lampe utilisée dépendent de la composition, de l'épaisseur de la couche et du degré de réticulation souhaité. En particulier, les monomères, comme l'acide acrylique et le méthacrylate de méthyle étant très volatils, on doit utiliser une lampe de puissance pas trop élevée pour éviter l'évaporation des monomères. L'exposition à la lumière ultraviolette a lieu de préférence en atmosphère dépourvue d'oxygène et de vapeur d'eau, qui agissent comme inhibiteur de polymérisation, particulièrement lorsque la quantité de composé amorceur de polymérisation est faible. La réticulation doit être suffisante pour que le polymère soit insoluble dans l'eau et les solvants organiques usuels, qu'il ait une résistance mécanique appropriée à l'utilisation ultérieure prévue, mais elle doit être telle que le polymère conserve son caractère hydrophile qui rend la couche antibuée.

On peut, éventuellement, pour améliorer le caractère antibuée de la couche obtenue, traiter celle-ci, après réticulation, par un composé basique tel qu'une solution aqueuse de soude (0,2 M de préférence) pendant quelques secondes, de 5 à 20 secondes environ, ou de l'ammoniac pendant quelques minutes, de 3 à 5 minutes environ. Ce traitement, qui favorise un échange ionique en surface, peut être utile particulièrement lorsque la quantité d'acide acrylique représente moins de 60 % de la masse totale des monomères (A) et (B).

Pour déterminer la résistance à l'abrasion de la couche, on utilise la méthode Taber (Teledyne Taber Abrasers) suivant laquelle on soumet le support enduit à l'action abrasive d'une plaque cylindrique abrasive (CS 10 F Resilient Calibrase Wheel) sous une charge de 250 g pendant 30 cycles. On mesure ensuite l'augmentation (en %) de la turbidité du produit traité par comparaison avec la turbidité initiale du produit. On peut comparer la turbidité du produit à celle d'un film de polyméthacrylate de méthyle, connu pour être très sensible à l'abrasion, qui a été soumis au méme test d'abrasion.

Pour l'évaluation de l'effet antibuée, on peut utiliser différents procédés. On peut, par exemple, placer le produit enduit à tester sur un récipient contenant de l'eau maintenue à une température de 10°C supérieure à la température ambiante. On prend, comme mesure du comportement d'un support vis-à-vis de la condensation d'eau, la durée qui s'écoule jusqu'à ce qu'un début de condensation soit perceptible à l'oeil nu (délai d'apparition de la buée). Avec des supports non enduits, le début de condensation est perceptible pratiquement immédiatement. Souffler sur le produit peut constituer aussi une première approche de l'évaluation de l'effet antibuée, d'autant plus que cela correspond à des conditions de formation de buée particulièrement sévères pour un support.

Les exemples suivants, non limitatifs, illustrent l'invention.

### EXEMPLE 1

On utilise comme support, une plaque de verre silicosodocalcique obtenue par la technique de fabrication du verre "flotté" (float glass).

On nettoie la surface à traiter en la trempant dans une solution aqueuse à 3 % de "Deconex 12" (Borer Chemie) pendant une heure. On rince avec de l'eau distillée et de l'alcool. On sèche en étuve à 120°C pendant une heure environ. On obtient ainsi une surface très mouillable, l'angle de contact d'une goutte d'eau sur cette surface étant inférieur à 5°.

On prépare un mélange comprenant 50 % en masse d'acide acrylique (composant A) et 50 % en masse de méthacrylate de méthyle (composant B), ces deux composants ayant été purifiés au préalable, si nécessaire. On ajoute à ce mélange un agent de réticulation, le diacrylate de 1,4-butanediol (produit SR 213 de la société Sartomer) et un amorceur de polymérisation, le benzildiméthylcétal (Irgacure 651 de Ciba-Geigy). Ces produits sont ajoutés en quantité, calculée par rapport à la masse totale des monomères A et B, respectivement de 5 % et 0,1 % en masse.

On place la plaque de verre à traiter sur un support très stable pour éviter de le soumettre à toute vibration qui empêcherait la formation d'une couche homogène.

On applique la composition préparée précédemment sur la plaque de verre, par coulée : la composition très liquide tombe goutte à goutte au centre de la plaque et s'étale spontanément sur le support pour former une couche homogène d'une épaisseur de 50 µm environ.

On expose alors la plaque de verre enduite, à température ambiante et sous atmosphère d'azote, au rayonnement ultraviolet en utilisant une lampe à vapeur de mercure UVP modèle B 100 A, d'une puissance de 100 W, située à 25 cm de la plaque. La durée de l'exposition est de 20 mn.

On soumet ensuite la couche de polymère aux vapeurs d'ammoniac pendant 5 mn. On obtient une couche optiquement satisfaisante.

On évalue le caractère antibuée de la plaque en verre traitée, en la soumettant pendant une journée au test décrit précédemment. On ne note aucune condensation d'eau. Une plaque de verre non enduite, servant de témoin se recouvre de buée immédiatement.

Le test de résistance à l'abrasion indique une turbidité de 10 % alors que le même test sur un film de polyméthacrylate de méthyle indique une turbidité de 25 %.

### EXEMPLE 2

On opère comme à l'exemple 1, mais on utilise une composition contenant 60 % en masse d'acide acrylique et 40 % en masse de méthacrylate de méthyle, et par rapport à la masse totale de ces monomères, 10 % de pentaacrylate de dipentaérythritol (produit SR 399 de la société Sartomer) comme agent de réticulation et 0,2 % d'amorceur de polymérisation "Irgacure 651".

On applique cette composition sur une plaque de verre nettoyée comme indiqué à l'exemple 1, en utilisant un tire film permettant d'obtenir une couche de 20 µm environ.

On expose la couche comme à l'exemple précédent.

On évalue le caractère antibuée de la couche comme à l'exemple 1. Au bout d'une journée, on ne note aucune condensation d'eau. Le test de résistance à l'abrasion indique une turbidité de 1,2 %.

La couche obtenue est optiquement satisfaisante.

### EXEMPLE 3

On opère comme à l'exemple 2, mais la composition contient 10 % en masse de triacrylate de triméthylolpropane (produit SR 351 de la société Sartomer) comme agent de réticulation et 0,1 % en masse d'"Irgacure 651" comme amorceur de polymérisation.

On applique la composition sur une plaque de verre propre, comme indiqué à l'exemple 2 et on l'expose comme aux exemples précédents.

La couche obtenue est optiquement satisfaisante ; on évalue le caractère antibuée comme à l'exemple 1, la couche ne présente aucune condensation d'eau.

Le test pour évaluer l'abrasion indique une turbidité de 8 %.

## Revendications

1. Composition réactive destinée a être appliquée sur un support ayant des qualités optiques en verre ou en matière plastique pour former un revêtement transparent antibuée et résistant à l'abrasion, caractérisée en ce qu'elle comprend :
A) de 40 à 80 % en masse d'au moins un monomère acide acrylique ou méthacrylique,
B) de 20 à 60 % en masse d'au moins un monomère ester d'acide acrylique ou méthacrylique,
C) de 1 à 15 % en masse, basé sur la masse totale des monomères (A) et (B) d'un agent de réticulation choisi parmi les monomères ou oligomères acryliques polyfonctionnels,
D) de 0,1 à 5 % en masse, basé sur la masse totale des monomères (A) et (B) d'un amorceur de polymérisation par action du rayonnement ultraviolet.

2. Composition conforme à la revendication 1, caractérisé en ce que le monomère (B) correspond à la formule : 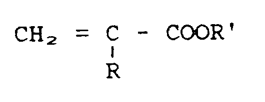 où R est un atome d'hydrogène ou un radical méthyle,
R' est un radical alkyle inférieur ayant de 1 à 4 atomes de carbone ou un radical hydroxyalkyle inférieur dans lequel le groupe alkyle a de 1 à 4 atomes de carbone.

3. Composition conforme à la revendication 2, caractérisée en ce que l'agent de réticulation est choisi dans le groupe formé par le diacrylate de 1,4-butanediol, le triacrylate de triméthylolpropane, le pentaacrylate de dipentaérythritol, le diacrylate de tripropylèneglycol et le diacrylate de diéthylèneglycol.

4. Composition conforme à la revendication 1, caractérisée en ce que l'amorceur de polymérisation est choisi dans le groupe formé par le benzildiméthylcétal, la (hydroxy-1-cyclohexyl) phénylcétone, le benzophénone et la 2 diméthyl-1- [4-(méthylthio) phényl]-2-morpholinopropanone 1.

5. Composition conforme à une des revendications 1 à 4, caractérisée en ce qu'elle comprend de 50 à 60 % en masse de monomères (A), de 40 à 50 % en masse de monomères (B), et, basé sur la masse totale des monomères (A) et (B), de 5 à 10 % en masse d'agent de réticulation et de 0,1 à 0,5 % d'amorceur de polymérisation.

6. Composition conforme à la revendication 5, caractérisé en ce qu'elle comprend 50 % en masse d'acide acrylique, 50 % en masse de méthacrylate de méthyle, 5 % en masse de diacrylate de 1,4-butanediol et 0,2 % en masse de benzyldiméthylcétal.

7. Composition conforme à la revendication 5, caractérisée en ce qu'elle comprend 60 % en masse d'acide acrylique, 40 % en masse de méthacrylate de méthyle, 10 % en masse de pentaacrylate de dipentaérythritol et 0,2 % en masse de benzildiméthylcétal.

8. Produit ayant des qualités optiques présentant des caractéristiques d'antibuée et de résistance à l'abrasion, comprenant un support en verre ou en matière plastique et au moins une couche antibuée transparente, caractérisé en ce que la couche est formée par apport sur le support de la composition selon une des revendications 1 à 7, et en ce qu'elle est réticulée par action d'un rayonnement ultraviolet.

9. Produit conforme à la revendication 8, caractérisé en ce que le support est en verre ou en polyméthacrylate de méthyle.

10. Procédé de fabrication d'un produit conforme à l'une des revendications 8 et 9, caractérisé en ce qu'il consiste :
1) à nettoyer la ou les surfaces du support à enduire pour la ou les rendre mouillables,
2) à appliquer sur la ou les surfaces du support la composition conforme à l'une des revendications 1 à 7, pour obtenir une couche homogène,
3) à exposer la ou les surfaces enduites au rayonnement ultraviolet pour polymériser et réticuler la composition.

11. Procédé conforme à la revendication 10, caractérisé en ce qu'après l'exposition au rayonnement ultraviolet, on traite les surfaces enduites par une base pour obtenir un échange ionique en surface.

12. Procédé conforme à la revendication 11, caractérisé en ce qu'on traite les surfaces enduites et exposées au rayonnement ultraviolet par de l'ammoniac ou une solution aqueuse de soude.

## Claims

1. Reactive composition intended to be applied onto a support possessing optical qualities, of glass or of plastics material, for forming an antimisting, abrasion-resistant transparent coating, characterized in that it comprises:
A) from 40 to 80% by mass of at least one acrylic or methacrylic acid monomer,
B) from 20 to 60% by mass of at least one acrylic or methacrylic acid ester monomer,
C) from 1 to 15% by mass, based upon the total mass of monomers (A) and (B), of a cross-linking agent selected from among the polyfunctional acrylic monomers or oligomers,
D) from 0.1 to 5% by mass, based upon the total mass of monomers (A) and (B), of a polymerisation initiator by action of ultra-violet radiation.

2. Composition according to Claim 1, characterized in that the monomer (B) corresponds to the formula: 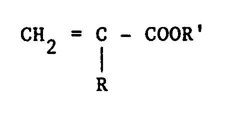 where R is a hydrogen atom or a methyl radical,
R' is a lower alkyl radical having from 1 to 4 carbon atoms or a lower hydroxyalkyl radical, in which the alkyl group has from 1 to 4 carbon atoms.

3. Composition according to Claim 2, characterized in that the cross-linking agent is selected from the group formed by 1,4-butanediol diacrylate, trimethylolpropane triacrylate, dipentaerythritol pentaacrylate, tripropyleneglycol diacrylate and diethyleneglycol diacrylate.

4. Composition according to Claim 1, characterized in that the polymerisation initiator is selected from the group formed of benzildimethylcetal, (hydroxy-1-cyclohexyl) phenylketone, benzophenone and 2 dimethyl-1- [4-(methylthio) phenyl]-2-morpholinopropanone 1.

5. Composition according to one of Claims 1 to 4, characterized in that it comprises from 50 to 60% by mass of monomers (A), from 40 to 50% by mass of monomers (B), and, based upon the total mass of the monomers (A) and (B), from 5 to 10% by mass of cross-linking agent and from 0.1 to 0.5% of polymerisation initiator.

6. Composition according to Claim 5, characterized in that it comprises 50% by mass of acrylic acid, 50% by mass of methyl methacrylate, 5% by mass of 1,4-butanediol diacrylate and 0.2% by mass of benzyldimethylcetal.

7. Composition according to Claim 5, characterized in that it comprises 60% by mass of acrylic acid, 40% by mass of methyl methacrylate, 10% by mass of dipentaerythritol pentaacrylate and 0.2% by mass of benzildimethylcetal.

8. Product having optical qualities possessing antimisting and abrasion-resistant characteristics, comprising a support of glass or of plastics material and at least one transparent antimisting film, characterized in that the film is formed by application onto the support of the composition according to one of Claims 1 to 7, and in that it is cross-linked by the action of ultra-violet radiation.

9. Product according to Claim 8, characterized in that the support is of glass or of polymethyl methacrylate.

10. Process for the production of a product according to one of Claims 8 and 9, characterized in that it consists:
1) of cleaning the surface or surfaces of the support to be coated to make it or them wettable,
2) of applying onto the surface or surfaces of the support the composition according to one of Claims 1 to 7, for the purpose of producing a homogeneous film,
3) of exposing the coated surface or surfaces to the ultraviolet radiation for polymerising and cross-linking the composition.

11. Process according to Claim 10, characterized in that, after the exposure to ultra-violet radiation, the coated surfaces are treated with a base for obtaining an ion exchange at the surface.

12. Process according to Claim 11, characterized in that the coated surfaces, exposed to ultra-violet radiation, are treated with ammonia or an aqueous soda solution.

## Patentansprüche

1. Reaktive Zusammensetzung, die dazu bestimmt ist, auf einen Träger mit optischen Qualitäten aus Glas oder Kunststoffmaterial aufgebracht zu werden, um eine transparente beschlagabweisende und abrasionsfegte Beschichtung zu bilden, dadurch gekennzeichnet, daß sie
A) 40 bis 80 Gew.-% wenigstens eines Acrylsäure- oder Methacrylsäuremonomers,
B) 20 bis 60 Gew.-% wenigstens eines Acrylsäureester- oder Methacrylsäureestermonomers,
C) 1 bis 15 Gew.-%, bezogen auf das Gesamtgewicht der Monomere (A) und (B), eines aus polyfunktionellen Acrylmonomeren oder -oligomeren ausgewählten Vernetzungsmittels und
D) 0,1 bis 5 Gew.-%, bezogen auf das Gesamtgewicht der Monomere (A) und (B), eines Beschleunigers für die Polymerisation durch Einwirkung ultravioletter Strahlung umfaßt.

2. Zusammensetzung nach Anspruch 1, dadurch gekennzeichnet, daß das Monomer (B) der Formel 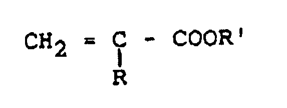 entspricht, worin R ein Wasserstoffatom oder ein Methylrest ist und R' ein Niederalkylrest mit 1 bis 4 Kohlenstoffatomen oder ein Hydroxyniederalkylrest mit 1 bis 4 Kohlenstoffatomen in der Alkylgruppe ist.

3. Zusammensetzung nach Anspruch 2, dadurch gekennzeichnet, daß das Vernetzungsmittel aus der aus 1,4-Butandioldiacrylat, Trimethylolpropantriacrylat, Dipentaerythritolpentaacrylat, Tripropylenglycoldiacrylat und Diethylenglycoldiacrylat bestehenden Gruppe ausgewählt ist.

4. Zusammensetzung nach Anspruch 1, dadurch gekennzeichnet, daß der Polymerisationsbeschleuniger aus der aus Benzyldimethylketal, (Hydroxy-1-cyclohexyl)phenylketon, Benzophenon und 2-Dimethyl-1-[4-(methylthio)phenyl]-2-morpholinopropanon bestehenden Gruppe ausgewählt ist.

5. Zusammensetzung nach einem der Ansprüche 1 bis 4, dadurch gekennzeichnet, daß sie 50 bis 60 Gew.-% Monomere (A), 40 bis 50 Gew.-% Monomere (B) und, bezogen auf das Gesamtgewicht der Monomere (A) und (B), 5 bis 10 Gew.-% Vernetzungsmittel und 0,1 bis 0,5 % Polymerisationsbeschleuniger enthält.

6. Zusammensetzung nach Anspruch 5, dadurch gekennzeichnet, daß sie 50 Gew.-% Acrylsäure, 50 Gew.-% Methylmethacrylat, 5 Gew.-% 1,4-Butandioldiacrylat und 0,2 % Benzyldimethylketal enthält.

7. Zusammensetzung nach Anspruch 5, dadurch gekennzeichnet, daß sie 60 Gew.-% Acrylsäure, 40 Gew.-% Methylmethacrylat, 10 % Dipentaerythritolpentaacrylat und 0,2 Gew.-% Benzyldimethylketal enthält.

8. Produkt mit optischen Qualitäten, das Antibeschlag- und Abrasionsfestigkeitseigenschaften zeigt und einen Träger aus Glas oder ein Kunststoffmaterial und wenigstens eine transparente Antibeschlagschicht aufweist, dadurch gekennzeichnet, daß die Schicht durch Aufbringen der Zusammensetzung nach einem der Ansprüche 1 bis 7 auf den Träger gebildet ist und daß sie durch die Einwirkung von ultravioletter Strahlung vernetzt ist.

9. Produkt nach Anspruch 8, dadurch gekennzeichent, daß der Träger aus Glas oder aus Polymethylmethacrylat besteht.

10. Verfahren zur Herstellung eines Produkts gemäß einem der Ansprüche 8 und 9, dadurch gekennzeichnet, daß es aus
1) der Reinigung der Oberfläche(n) des zu beschichtenden Trägers, um sie benetzbar zu machen,
2) der Aufbringung auf die Oberfläche(n) des Trägers der Zusammensetzung nach einem der Ansprüche 1 bis 7, um eine homogene Schicht zu erhalten, und
3) dem Einwirkenlassen ultravioletter Strahlung auf die Oberfläche(n), um die Zusammensetzung zu polymerisieren und zu vernetzen, besteht.

11. Verfahren nach Anspruch 10, dadurch gekennzeichnet, daß nach der Einwirkung der ultravioletten Strahlung die beschichteten Oberflächen mit einer Base behandelt werden, um einen Ionenaustausch an der Oberfläche zu erzielen.

12. Verfahren nach Anspruch 11, dadurch gekennzeichnet, daß man die, beschichteten und der UV-Strahlung ausgesetzten Oberflächen mit Ammoniak oder einer wäßrigen Sodalösung behandelt.
